**Europäisches Patentamt**

**European Patent Office**

**Office européen des brevets**

(11) Veröffentlichungsnummer: **0 512 239 A1**

# (12) EUROPÄISCHE PATENTANMELDUNG

(21) Anmeldenummer: **92105280.9**

(22) Anmeldetag: **27.03.92**

(51) Int. Cl.5: **B60T 8/40**, B60T 8/42

(30) Priorität: **07.05.91 DE 4114845**

(43) Veröffentlichungstag der Anmeldung:
**11.11.92 Patentblatt 92/46**

(84) Benannte Vertragsstaaten:
**DE FR GB SE**

(71) Anmelder: **ROBERT BOSCH GMBH**
**Postfach 30 02 20**
**W-7000 Stuttgart 30(DE)**

(72) Erfinder: **Willmann, Karl-Heinz, Dipl.-Ing.**
**Arndtstrasse 45**
**W-7149 Freiberg/N.(DE)**

(54) **Blockierschutzeinrichtung für eine hydraulische Fahrzeugbremsanlage.**

(57) Bekannte Blockierschutzeinrichtungen weisen Blockierschutzventilanordnungen auf zum Ableiten von Druckmittel aus Radbremsen hin zu Druckmittelspeichern, die üblicherweise als Kolbenspeicher mit beweglichen Dichtungen ausgebildet sind. Die Kolbenspeicher werden entleert mittels Rückförderpumpen. Solche Kolbenspeicher sind teuer und können undicht werden.

Zur Vermeidung dieser Nachteile wird erfindungsgemäß vorgeschlagen, Druckmittelspeicher lediglich als Hohlräume in starren Bauteilen auszubilden zur Einsparung von beweglichen Bauteilen. Damit diese als Hohlräume ausgebildeten Druckmittelspeicher (25, 26) aus Radbremsen (7, 8, 9, 10) stammende Druckmittelmengen aufzunehmen vermögen, werden sie zuvor mittels selbstansaugend ausgebildeter Rückförderpumpen (29, 30) zumindest teilweise entleert.

EP 0 512 239 A1

## Stand der Technik

Die Erfindung geht aus von einer Blockierschutzeinrichtung nach der Gattung des Anspruchs 1. Die GB-PS 21 19 883 offenbart eine hydraulische Fahrzeugbremsanlage mit einer Blockierschutzeinrichtung und einer Antriebsschlupfregelung. Die Blockierschutzeinrichtung besitzt wenigstens eine selbstansaugend ausgebildete Rückförderpumpe mit einem Eingang und einen mit diesem Eingang verbundenen Druckmittelspeicher. Der Druckmittelspeicher ist als ein Membranspeicher dargestellt und hat den Nachteil, daß seine Membran aus einem gasdichten und dennoch ausreichend elastischen Werkstoff herzustellen ist. Ein in der DE-OS 38 42 370 offenbarter Druckmittelspeicher weist einen Zylinder, einen in diesem verschiebbaren Kolben mit einer beweglichen Dichtung und eine auf den Kolben wirkende Rückstellfeder auf. Dieser Druckmittelspeicher ist kompliziert im Aufbau, und es gelingt nur mit hohem Fertigungsaufwand, diesen Druckmittelspeicher so auszubilden, daß er auf Dauer druckdicht ist und ein Verlust von Druckmittel vermieden wird. Die DE-Patentanmeldung 39 40 180/PC-EP 90/02086 gibt deshalb für solche Druckmittelspeicher von deren Kolben schließbare Sitzventile an, mittels denen die Gefahr des Einsaugens von Luft in die Zylinder vermieden wird, falls die verwendeten Rückförderpumpen selbstansaugend ausgebildet sind. Diese Sitzventile verursachen zusätzliche Kosten.

## Vorteile der Erfindung

Die erfindungsgemäße Blockierschutzeinrichtung mit den kennzeichnenden Merkmalen des Anspruchs 1 besitzt einen in einfacher Weise preisgünstig herstellbaren Druckmittelspeicher ohne bewegliche Elemente.

Durch die in den Unteransprüchen aufgeführten Maßnahmen sind vorteilhafte Weiterbildungen und Verbesserungen der im Anspruch 1 angegebenen Blockierschutzeinrichtung möglich. Die kennzeichnenden Merkmale der Ansprüche 2 und 3 ergeben den Vorteil, daß die Betriebsbereitschaft des Druckmittelspeichers sichergestellt wird ab der Inbetriebnahme eines damit ausgerüsteten Fahrzeugs. Die kennzeichnenden Merkmale des Anspruchs 4 geben ein vorteilhaftes Ausführungsbeispiel an mit Steuermitteln, die in Folge der heutzutage üblichen Miniaturisierungstechnik nur wenig Bauraum beanspruchen und billig herstellbar sind.

## Zeichnung

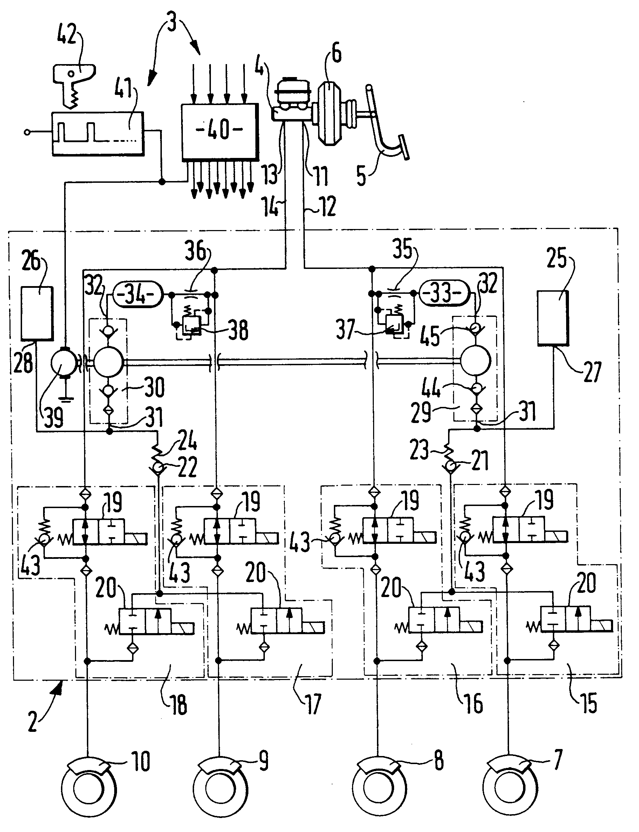

Ein Ausführungsbeispiel der erfindungsgemäßen Blockierschutzeinrichtung für eine hydraulische Fahrzeugbremsanlage ist in der Zeichnung dargestellt und in der nachfolgenden Beschreibung näher erläutert.

## Beschreibung des Ausführungsbeispiels

Die erfindungsgemäße Blockierschutzeinrichtung 2 ist Bestandteil einer hydraulischen Fahrzeugbremsanlage 3, die einen beispielsweise zweikreisigen Hauptbremszylinder 4, ein Bremspedal 5 zu dessen Betätigung und zur Unterstützung einen Bremskraftverstärker 6 aufweist, und zu der noch aus dem Hauptbremszylinder 4 versorgbare Radbremsen 7, 8, 9 und 10 gehören.

Die Radbremsen 7 und 8 sind einem ersten Hauptbremszylinderanschluß 11 über eine erste Hauptbremsleitung 12 zugeordnet. Die Radbremse 7 ist beispielsweise einem rechten Hinterrad HR zugeordnet. Die Radbremse 8 ist beispielsweise einem diagonal gegenüberliegenden linken Vorderrad VL zugeordnet. Beide Radbremsen 7 und 8 weisen nicht dargestellte Radbremszylinder auf. In gleichartiger Weise sind die beiden Radbremsen 9 und 10 einem zweiten Hauptbremszylinderanschluß 13 über eine zweite Hauptbremsleitung 14 zugeordnet. Die Radbremse 9 kann dabei einem rechten Vorderrad VR zugeordnet sein, und die Radbremse 10 ist dann für das linke Hinterrad HL bestimmt. Die aufgezählte Zuordnung der Radbremsen zu den Rädern entspricht der weit verbreiteten K-Kreisaufteilung. Abweichend von dieser K-Kreisaufteilung können natürlich auch die Radbremsen 7 bis 10 den Rädern des Fahrzeugs so zugeordnet werden, daß eine TT-Bremskreisaufteilung zustandekommt.

Die Blockierschutzeinrichtung 2 ist zwischen den Hauptbremszylinder 4 und die Radbremsen 7 bis 10 eingebaut. Die Blockierschutzeinrichtung 2 ist beispielsweise zur individuellen Radbremsdruckmodulation in jeder der Radbremsen 7 bis 10 eingerichtet und besitzt zu diesem Zweck für jede der Radbremsen 7 bis 10 eine eigene Blockierschutzventilanordnung 15, 16, 17 und 18. Die Blockierschutzventilanordnungen 15 bis 18 bestehen beispielsweise in zum Stand der Technik gehörender Weise jeweils aus zwei 2/2-Wegeventilen 19 und 20, die elektrisch steuerbar sind. Jeweils das 2/2-Wegeventil 19 ist in seiner Normalstellung geöffnet und verbindet dadurch den Hauptbremszylinder 4 mit der jeweiligen der Radbremsen 7 bis 10. Das jeweilige 2/2-Wegeventil 20 ist mit der jeweiligen Radbremse 7 bis 10 verbunden und in der Normalstellung geschlossen. Es ist auch möglich, anstelle von zwei 2/2-Wegeventilen 19 und 20 ein aus dem Stand der Technik entnehmbares 3/2-Wegeventil oder 3/3-Wegeventil als eine Blockierschutzventilanordnung einzusetzen.

An die 2/2-Wegeventile 20 der Blockierschutzventilanordnungen 15 und 16 schließt sich ein gemeinsames Rückschlagventil 21 an. In gleicher Weise schließt sich an die beiden 2/2-Wegeventile 20 der Blockierschutzventilanordnungen 17 und 18 ein weiteres gemeinsames Rückschlagventil 22 an. Gegen die Kräfte von Federn 23 und 24 sind die Rückschlagventile 21 und 22 öffenbar zu jeweils eigenen Druckmittelspeichern 25 und 26.

Jeder Druckmittelspeicher 25, 26 ist als ein Hohlraum ausgebildet innerhalb eines starren Gehäuses, das beispielsweise der Gehäuseblock der Blockierschutzeinrichtung 2 sein kann. An der jeweils tiefsten Stelle hat jeder Druckmittelspeicher 25, 26 einen bodenseitigen Anschluß 27, 28.

Des weiteren besitzt die Blockierschutzeinrichtung 2 jedem der Rückschlagventile 21 und 22 nachgeordnet selbstansaugend ausgebildete Rückförderpumpen 29 und 30 mit jeweils einem Eingang 31 und einem Ausgang 32. Die Eingänge 31 sind jeweils an die Rückschlagventile 21 und 22 angeschlossen und kommunizieren dadurch mit dem jeweils zugeordneten Druckmittelspeicher 25 bzw. 26 über dessen bodenseitigen Anschluß 27 bzw. 28. Die Ausgänge 32 der Rückförderpumpen 29 und 30 sind über als Hohlräume ausgestaltete Dämpferkammern 33 bzw. 34 und Kombinationen aus Drosseln 35 bzw. 36 mit parallel geschalteten Druckgefälleventilen 37 bzw. 38 mit dem jeweils zugeordneten Hauptbremszylinderanschluß 11 bzw. 13 und der davon ausgehenden jeweiligen Hauptbremsleitung 12 bzw. 14 verbunden.

Die Rückförderpumpen 29 und 30 besitzen vorzugsweise einen gemeinsamen Antrieb 39, der als ein Elektromotor ausgebildet ist. Dieser Antrieb 39 bzw. Elektromotor 39 ist einerseits an ein Steuergerät 40 der Blockierschutzeinrichtung und andererseits an einen elektrischen Impulsgeber 41 angeschlossen. Der Impulsgeber 41 ist beispielsweise mittels eines Zündschlüssels 42 eines mit der Blockierschutzeinrichtung 2 ausgerüsteten Fahrzeugs aktivierbar. Der Impulsgeber 41 ist so eingerichtet, daß er beginnend mit seiner Aktivierung in vorbestimmten Zeitabständen Rechteckimpulse mit vorgegebener Zeitdauer abgibt zum zeitweiligen Einschalten des Elektromotors 39.

Das Steuergerät 40 ist beispielsweise in einer aus dem Stand der Technik entnehmbaren Weise an vier nicht dargestellte Raddrehungssensoren angeschlossen und eingerichtet zur Auswertung von aus diesen Raddrehungssensoren kommenden Signalen zum Zweck der Steuerung der Blockierschutzventilanordnungen 15, 16, 17 und 18 in dem Sinne, daß bei beginnender Radblockiergefahr die jeweilige Radbremse 7 bzw. 8, 9 oder 10 von dem Hauptbremszylinder 4 hydraulisch getrennt wird und mit dem jeweils zugeordneten Druckmittelspeicher 25 bzw. 26 verbindbar ist. Bei beginnender Radblockiergefahr ist auch mittels des Steuergeräts 40 der Elektromotor 39 zum Antreiben der Rückförderpumpen 29 und 30 einschaltbar.

Funktionsweise der Blockierschutzeinrichtung

Wenn zwecks Inbetriebnahme eines Fahrzeugs, das mit dieser erfindungsgemäßen Blockierschutzeinrichtung 2 ausgerüstet ist, der Zündschlüssel 42 zur Aktivierung einer nicht dargestellten Zünd- und Anlaßanlage und zur Aktivierung des Impulsgebers 41 eingesetzt wird, dann gibt dieser Impulsgeber 41 einen ersten Stromimpuls ab mit der Folge, daß der Elektromotor 39 die Rückförderpumpen 29 und 30 während einer vorbestimmten Zeitspanne antreibt. Die in Betrieb gesetzten Rückförderpumpen 29 und 30 senken die in den Druckmittelspeichern 25 und 26 vorhandenen Drücke ab, so daß durch die bodenseitigen Anschlüsse 27 und 28 hindurch Druckmittelmengen aus den Druckmittelspeichern 25 und 26 heraus und in die Rückförderpumpen 29 und 30 eingesaugt und von diesen Rückförderpumpen 29 und 30 durch die Dämpferkammern 33, 34 und die Drosseln 35 und 36 und gegebenenfalls durch die Druckgefälleventile 37 und 38 in den Hauptbremszylinder 4 gedrückt werden. Infolgedessen werden die Druckmittelspeicher 25 und 26 zumindest teilweise entleert. Damit das Abströmen von Druckmittelmengen durch die bodenseitigen Anschlüsse 27 und 28 mit Sicherheit vor sich geht, sind die bodenseitigen Anschlüsse 27 und 28 der Druckmittelspeicher 25 und 26 höher angeordnet als die Eingänge 31 der Rückförderpumpen 29 und 30. Im Umfang von aus den Druckmittelspeichern 25 und 26 entnommenen Druckmittelmengen vermögen die Druckmittelspeicher 25 und 26 erneut Druckmittel aufzunehmen durch Einsaugen.

Im normalen Bremsbetrieb, wenn also keine Radblockiergefahr besteht, sind, wie bereits beschrieben, die 2/2-Wegeventile 19 der Blockierschutzventilanordnungen 15 bis 18 durchgängig, so daß durch Betätigung des Bremspedals 5 im Hauptbremszylinder 4 bewirkte Druckanstiege zu den Radbremsen 7 bis 10 gelangen und dort Bremsdrücke bewirken. Durch Loslassen des Bremspedals 5 können die Radbremsen 7 bis 10 von Bremsdrücken entlastet werden. Damit unvermeidliche Drosselungen innerhalb der 2/2-Wegeventile 19 einen erwünscht schnellen Bremsdruckabbau nicht behindern, sind diesen 2/2-Wegeventilen 19 in Form von Rückschlagventilen 43 ausgebildete Radbremsschnellentlastungsventilezugeordnet. Diese Rückschlagventile 43 dienen auch der Sicherheit, so daß beispielsweise bei einer unbeabsichtigten Schließung der 2/2-Wegeventile 19 und dem Verbleiben in dieser Schließstellung während Bremsvorgängen dem Willen des Fahrers gemäß die Radbremsen 7 bis 10 von ihren Bremsdrücken entlastbar sind.

Wenn durch unzulässig stark ansteigende Betätigung des Bremspedals oder durch schlechter werdenden Reibkontakt zwischen Rädern des Fahrzeugs und einer darunter befindlichen Fahrbahn Radblockiergefahr einsetzt, dann werden in zum Stand der Technik gehörender Weise die 2/2-Wegeventile 19 der betroffenen Räder in die Schließstellung gesteuert. Wenn zur Beseitigung von Radblockiergefahr Bremsdruckabsenkungen notwendig sind, so werden zusätzlich noch die 2/2-Wegeventile 20 der betroffenen Räder in die Öffnungsstellungen gesteuert, so daß Druckmittelmengen aus den Radbremsen 7, 8, 9 bzw. 10 unter Öffnung des jeweils zugeordneten Rückschlagventils 21 und/oder 22 zum nachgeordneten Druckmittelspeicher 25 bzw. 26 strömen können. Die Federn 23 und 24 der Rückschlagventile 21 und 22 sind derart abgestimmt, daß trotz Unterdrücken, die in den Druckmittelspeichern 25 und 26 vorhanden sein sollen, in den Radbremsen 7 bis 10 Mindestdrücke verbleiben, die vorzugsweise wenigstens so hoch wie der Atmosphärendruck sind. Dadurch wird ein ungewolltes weites Öffnen der Radbremsen 7 bis 10 vermieden. Denn ein zu weites Öffnen der Radbremsen hat den Nachteil, daß bei erneutem Einsatz der Radbremsen möglicherweise die Pumpkapazität des Hauptbremszylinders 4 nicht ausreicht, um Bremsbeläge zum Greifen zu bringen und dabei auch noch notwendige Radbremsdrücke aufzubauen.

Ist durch Druckabsenkung in der jeweiligen Radbremse 7 bis 10 die Radblockiergefahr beseitigt` so steuert das Steuergerät 40 zunächst das jeweilige 2/2-Wegeventil 20 in die Schließstellung und sorgt durch Öffnen des jeweiligen 2/2-Wegeventils 19 bedingungsabhängig zumindest für eine teilweise Wiederherstellung des Radbremsdrucks.

Es ist erkennbar, daß eine durch notwendigen Blockierschutzbetrieb ausgelöste Einschaltung der Rückförderpumpen 29 und 30 zu Druckabsenkungen und wenigstens zu einer teilweisen Entleerung der Druckmittelspeicher 25 und 26 führt, so daß diese aus den zugeordneten Radbremsen 7 und 8 bzw. 9 und 10 Druckmittelmengen zur Bremsdruckabsenkung aufnehmen können. Weil aber nicht auszuschließen ist, daß ein Blockierschutzbetrieb sehr lange auf sich warten läßt, und daß die Blockierschutzventilanordnungen 15 bis 18 und Einlaßventile 44 und Auslaßventile 45 der Rückförderpumpen 29 und 30 nicht vollständig dicht sind, besteht die Gefahr, daß bei einsetzendem Blockierschutzbetrieb 2 die Druckmittelspeicher 25 und 26 nicht ausreichend entleert sind. Dies hätte den Nachteil, daß beispielsweise plötzlich notwendig werdende sehr große Bremsdruckabsenkungen nicht in der gewünschten schnellen Weise zustandekommen, weil bei normaler Ausgestaltung der Rückförderpumpen 29 und 30 deren Pumpkapazität für die gewünschte Geschwindigkeit der Bremsdruckabsenkungen nicht ausreichen würde. Aus diesem Grund ist der Impulsgeber 41 so eingerichtet, daß er immer wieder mal die Rückförderpumpen 29 und 30 in Betrieb setzt und für eine ausreichende Entleerung der sich gegebenenfalls in unerwünschter Weise selbst füllenden Druckmittelspeicher 25 und 26 sorgt.

Ergänzend wird noch bemerkt, daß die Verwendung von selbst ansaugenden Rückförderpumpen 29 und 30 auch die Möglichkeit schafft, mit wenig technischem Mehraufwand, so wie dies der Stand der Technik leert, die Blockierschutzeinrichtung 2 so weiterzubilden, daß mittels ihr auch Antriebsschlupfregelbetrieb per Bremsung von Antriebsrädern des Fahrzeugs möglich ist. Somit ist die Verwendung der erfindungsgemäß gestalteten Druckmittelspeicher 25 und 26 nicht auf das dargestellte Beispiel der Blockierschutzeinrichtung 2 beschränkt.

Zusätzlich wird noch bemerkt, daß gemäß den heute zur Verfügung stehenden Möglichkeiten der Impulsgeber 41 in das Steuergerät 40 integriert werden kann.

**Patentansprüche**

1. Blockierschutzeinrichtung für eine hydraulische Fahrzeugbremsanlage mit wenigstens einer Blockierschutzventilanordnung (15, 16, 17, 18) zur Entnahme von Druckmittel aus wenigstens einer Radbremse (7, 8, 9, 10), mit wenigstens einem Druckmittelspeicher (25, 26) zur Aufnahme von Druckmittel aus der wenigstens einen Radbremse (7, 8, 9, 10), mit wenigstens einer selbstansaugend ausgebildeten und einen Eingang (31) aufweisenden Rückförderpumpe (29, 30) zum Entfernen von Druckmittel aus dem wenigstens einen Druckmittelspeicher (25, 26) und mit einem einschaltbaren Antrieb (39) für die Rückförderpumpe (29, 30), dadurch gekennzeichnet, daß der Druckmittelspeicher (25, 26) als ein in einem starren Bauteil befindlicher Hohlraum mit einem bodenseitigen Anschluß (27, 28) ausgebildet ist, daß der bodenseitige Anschluß (27, 28) höher angeordnet ist als der Eingang (31) der Rückförderpumpe (29, 30) und daß zwischen der wenigstens einen Blockierschutzventilanordnung (15, 16, 17, 18), die zur Entnahme von Druckmittel aus der wenigstens einen Radbremse (7, 8, 9, 10) dient, und einer Kombination jeweils aus einem Druckmittelspeicher (25, 26) und einem Eingang (31) einer Rückförderpumpe (29, 30) ein mittels einer Feder (23, 24) belastetes Rückschlagventil (21, 22), das zum Druckmittelspeicher (25, 26) hin öffenbar ist, angeordnet ist.

2. Blockierschutzeinrichtung nach Anspruch 1, dadurch gekennzeichnet, daß ein steuerndes Mittel (41) vorgesehen ist zum Einschalten des Antriebs (39) der Rückförderpumpe (29, 30) für eine vorbestimmbare Zeitspanne beginnend mit der Inbetriebnahme eines mit der Blockierschutzeinrichtung (2) ausgerüsteten Fahrzeugs.

3. Blockierschutzeinrichtung nach Anspruch 1, dadurch gekennzeichnet, daß steuernde Mittel (41) vorgesehen sind zum wiederholbaren Einschalten des Antriebs (39) der Rückförderpumpe (29, 30) für vorbestimmte Zeitspannen beginnend mit der Inbetriebnahme eines mit der Blockierschutzeinrichtung (2) ausgerüsteten Fahrzeugs.

4. Blockierschutzeinrichtung nach einem der Ansprüche 1 bis 3, dadurch gekennzeichnet, daß der Antrieb (39) der wenigstens einen Rückförderpumpe (29, 30) als ein Elektromotor (39) ausgebildet ist und daß ein den Elektromotor (39) einschaltendes steuerndes Mittel als ein elektrischer Impulsgeber (41) ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 216 967 (TEVES) <br> * Seite 7, Zeile 17 - Zeile 28; Abbildung 1 * <br> --- | 1,4 | B60T8/40 <br> B60T8/42 |
| A | DE-A-3 727 330 (TEVES) <br> * Zusammenfassung; Abbildung 2 * <br> --- | 1,4 | |
| P,A | DE-A-4 011 329 (BOSCH) <br> * Spalte 4, Zeile 49 - Zeile 53; Abbildung 1 * <br> --- | 2-4 | |
| A | DE-A-3 716 517 (TEVES) <br><br> ----- | | |

**RECHERCHIERTE SACHGEBIETE (Int. Cl.5)**

B60T

Der vorliegende Recherchenbericht wurde für alle Patentansprüche erstellt

| Recherchenort | Abschlußdatum der Recherche | Prüfer |
|---|---|---|
| BERLIN | 20 JULI 1992 | BLURTON M.D. |